# EUROPEAN PATENT APPLICATION

(11) **EP 1 380 448 A1**
(43) Date of publication of application: **14.01.2004**
(21) Application number: 03077187.7
(22) Date of filing: 10.07.2003
(51) Int. Cl.: B60G 7/02, B60G 9/00

(54) **Device for securing a wheel axle to the chassis of a vehicle**

(30) Priority: 11.07.2002 NL 1021052
(71) Applicant: Weweler Nederland B.V., 7332 AP Apeldoorn (NL)
(72) Inventor: Aalderink, Derk Geert, 7245 NV Laren (NL)
(74) Representative: Iemenschot, Johannes Andreas, Ir.

(57) **Abstract**

A device for securing a wheel axle to the chassis of a vehicle, comprises two bearing brackets (6, 7) secured to the chassis (1, 2) on either side of the vehicle, two carrier arms (8, 9), which are each pivotably secured to an associated bearing bracket and to which the wheel axle is secured, a connecting bar (11) which extends between the two bearing brackets and the ends of which are secured to the bearing brackets, and two struts (12, 13), each of which are connected at one end to the connecting bar in the central region of the connecting bar by means of a threaded connection comprising a single threaded bolt (14, 15) and, from there, extend obliquely upwards in order to be secured to the chassis at the other end. To increase the force which can be transmitted, at the location of the threaded connection between a strut (12, 13) and the connecting bar (11) at least the connecting bar or the strut is provided with a recess, and furthermore there is an element which is coupled to the strut or connecting bar at least in the transverse direction of the threaded bolt (14, 15) and forms an elevation with respect to the strut or connecting bar which engages in the recess.

## Description

The invention relates to a device for securing a wheel axle to the chassis of a vehicle, comprising two bearing brackets secured to the chassis on either side of the vehicle, two carrier arms, which are each pivotably secured to an associated bearing bracket and to which the wheel axle is secured, a connecting bar which extends between the two bearing brackets and the ends of which are secured to the bearing brackets, and two struts, each of which are connected at one end to the connecting bar in the central region of the connecting bar by means of a threaded connection comprising a single threaded bolt and, from there, extend obliquely upwards in order to be secured to the chassis at the other end.

A device of this type is known, for example, from EP-A-0421556. In this known device, the struts are connected to the connecting bar in the centre of the connecting bar by means of a common threaded bolt. This design has the drawback that the maximum force which can be transmitted by the connection between the connecting bar and a strut is limited. This is because this force is determined by the sum of the maximum shear force of the threaded bolt and the maximum frictional force between the connecting bar and the strut. This problem could be resolved by using a plurality of threaded bolts in a connection between the connecting bar and a strut. However, this has the drawback that the angle between the strut and the connecting bar is then fixed. This means that a combination of connecting bar and struts of this type which has been prepared in a factory cannot be used for vehicles with a varying vertical distance between connecting bar and chassis and differing track widths. It is disadvantageous to drill holes into the connecting bar during assembly to the vehicle, since in most cases the connecting bar is provided with a corrosion-resistant layer. This layer would then be damaged.

It is an object of the invention to overcome the abovementioned drawbacks.

This object is achieved, in accordance with the invention, by the device according to claim 1.

The measure according to the invention ensures that the connection between the connecting bar and a strut is at least partially positively locking, with the result that a considerably greater force can be transmitted. Consequently, it is possible to make do with a single threaded bolt, so that the angle between the connecting bar and a strut can be adjusted.

It is preferable for the depth of the recess to be greater than the height of the elevation. This enables a strut to be clamped with prestress against the connecting bar by the threaded bolt.

Further embodiments of the device according to the invention are defined in claims 3-5.

The invention also relates to a combination of a connecting bar and two struts which is intended for the device according to the invention.

The invention will be explained in more detail in the exemplary embodiment which follows and with reference to the drawing, in which:
Fig. 1 shows a view of a specific embodiment of the device according to the invention,
Fig. 2 shows a side view of the device shown in Fig. 1 as seen in the direction indicated by arrow II,
Fig. 3 shows a cross section through the connection between the connecting bar and a strut on line III-III in Fig. 1, and
Fig. 4 shows a cross section corresponding to that shown in Fig. 3 through another embodiment of the connection between the connecting bar and a strut.

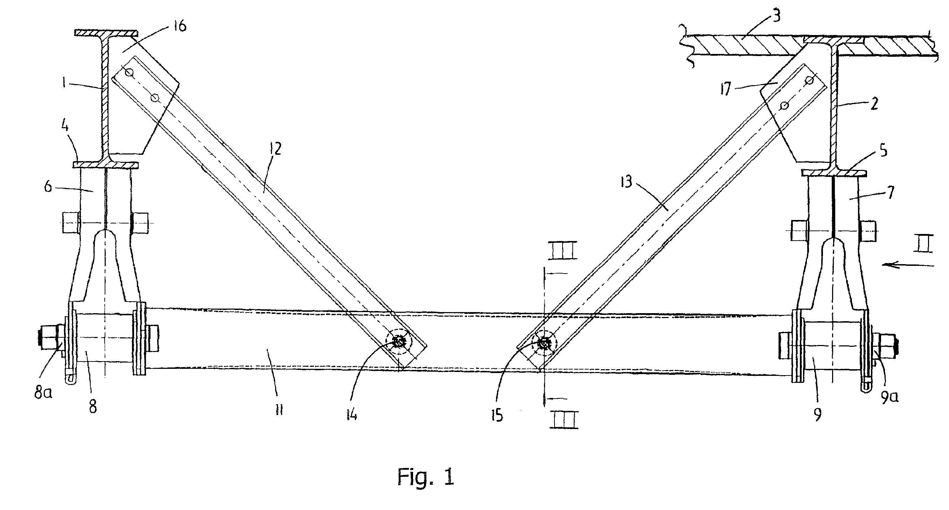

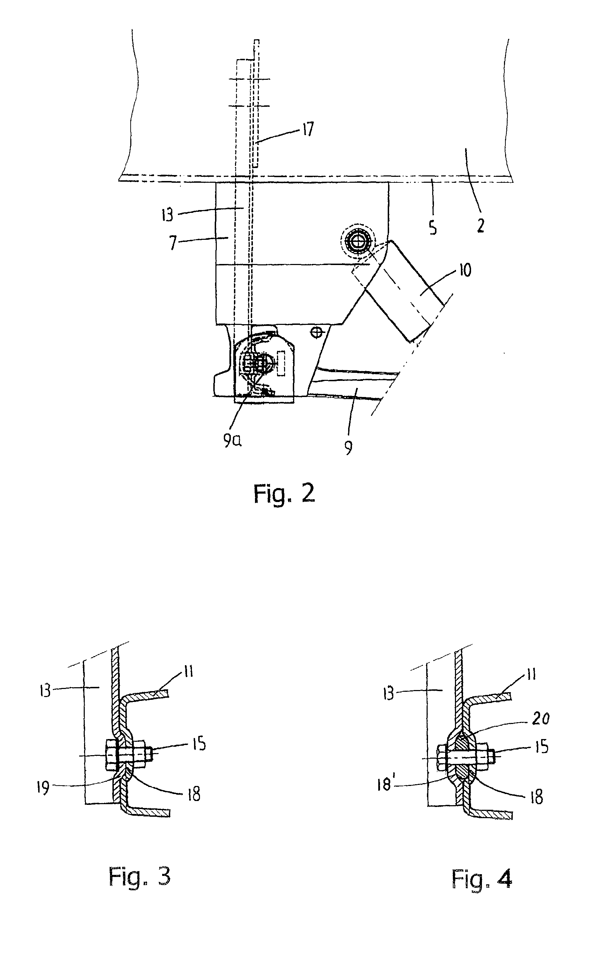

Figs 1 and 2 illustrate a specific embodiment of the device for securing a wheel axle to the chassis of a vehicle. The chassis of the vehicle comprises two chassis beams 1 and 2 which are located on either side of the vehicle and in this case are I-shaped in cross section. The chassis beams 1, 2 inter alia support a loading platform 3 of the vehicle. A bearing bracket 6, 7 is secured to the bottom flange 4, 5 of each chassis beam 1, 2 by means of a welded joint or a threaded bolt connection. A carrier arm 8, 9 is secured to the underside of each bearing bracket 6, 7 in such a manner that it can pivot about a pivot pin 8a, 9a. When they are fitted to the vehicle, the carrier arms extend in the longitudinal direction of the vehicle. The wheel axle (not shown) is secured to the two carrier arms 8, 9, extending transversely with respect to the carrier arms. In general, a shock absorber 10 will be mounted between a carrier arm 8, 9 and an associated bearing bracket.

Between the two bearing brackets 8, 9 there is a connecting bar 11, the ends of which are secured to the bearing brackets 6, 7, for example by means of the pivot pins 8a, 9a. The connecting bar 11 is responsible for increasing the rigidity of the structure.

The rigidity of the structure is further increased by two struts 12, 13 which are arranged between the connecting bar 11 and the chassis beams 1, 2. One end of the struts 12, 13 is connected to the connecting bar in the central region of the connecting bar 11 by means of a single threaded bolt 14, 15. At the other end, the struts 12, 13 are secured by means of bolts or by welding to a mounting plate 16, 17 which is welded to the corresponding chassis beam 1, 2.

At the location of the threaded connection between each strut 12, 13 and the connecting bar 11, the connecting bar 11 and/or the strut 12, 13 is provided with a recess 18, 18', and furthermore there is an element 19, 20, which is coupled to the strut 12, 13 and/or the connecting bar 11 at least in the transverse direction of the threaded bolt 15 and which with respect to the strut 12, 13 and/or the connecting bar 11 forms an elevation which latches into the recess 18, 18'.

In the embodiment shown in Fig. 3, the strut 13 is provided with an elevation 19 which latches into the recess 18. Obviously, it is also possible for the struts 12 and 13 to be provided with a recess and the connecting bar 11 to be provided with elevations.

It is expedient for the recesses 18 and elevations 19 in the connecting bar 11 and the struts 12 and 13 to be formed by a plastically deformed (pressed) section of the connecting bar 11 or struts 12 and 13, as in the embodiment shown in Fig. 3. If appropriate, the elevation could also be applied by welding on a plug.

In the embodiment shown in Fig. 4, both the connecting bar 11 and the strut 13 are provided with a recess 18 and 18', respectively, and the element which is coupled to the strut 13 and the connecting bar 11 is formed by a ring 20 which latches both into the recess 18 in the connecting bar 11 and into the recess 18' in the strut 13. The ring 20 is preferably bevelled at the outer edge on both sides, and the shape of the ring 20 and the shape of the recesses 18, 18' are matched to one another. The result is a very strong connection.

Using an elevation which latches into a recess makes the connection between the connecting bar 11 and a strut 12, 13 at least partially positively locking, with the result that a relatively high force can be transmitted. Consequently, it is possible to make do with a single threaded bolt 14, 15, so that the angle between the connecting bar 11 and a strut 12, 13 can still be adjusted and can be matched to the height of the bearing brackets 6, 7, the height of the chassis beams 1, 2 and/or the track width of the vehicle, i.e. the distance between the chassis bars 1, 2.

The depth of the recess 18 is preferably greater than the height of the elevation, so that there is a small space between the recess and the elevation. As a result, a strut 12, 13 can be clamped against the connecting bar 11 with prestress by the threaded bolt 14, 15, which is advantageous for the purpose of transmitting forces.

## Claims

1. Device for securing a wheel axle to the chassis of a vehicle, comprising two bearing brackets (6, 7) secured to the chassis (1, 2) on either side of the vehicle, two carrier arms (8, 9), which are each pivotably secured to an associated bearing bracket and to which the wheel axle is secured, a connecting bar (11) which extends between the two bearing brackets and the ends of which are secured to the bearing brackets, and two struts (12, 13), each of which are connected at one end to the connecting bar in the central region of the connecting bar by means of a threaded connection comprising a single threaded bolt (14, 15) and, from there, extend obliquely upwards in order to be secured to the chassis at the other end, **characterized in that** at the location of the threaded connection between a strut (12, 13) and the connecting bar (11) at least the connecting bar or the strut is provided with a recess (18, 18'), and furthermore there is an element (19, 20) which is coupled to the strut or connecting bar at least in the transverse direction of the threaded bolt (14, 15) and forms an elevation with respect to the strut or connecting bar which engages in the recess (18, 18').

2. Device according to claim 1, in which the depth of the recess is greater than the height of the elevation.

3. Device according to claim 1 or 2, in which the recess (18, 18') and/or the element (19) which is coupled to the strut or the connecting bar is formed by a plastically deformed section of the strut or the connecting bar.

4. Device according to claim 1 or 2, in which the element which is coupled to the strut or the connecting bar is formed by a plug which is welded to the strut or the connecting bar.

5. Device according to claim 1 or 2, in which both the connecting bar (11) and the strut (12, 13) are provided with a recess (18, 18'), and the element which is coupled to the strut or the connecting bar is formed by a ring (20) which latches both into the recess (18) in the connecting bar (11) and into the recess (18') in the strut (12, 13).

6. Combination of a connecting bar and two struts intended for the device according to one or more of claims 1-5.
